# EUROPÄISCHE PATENTANMELDUNG

(11) **EP 3 249 657 A1**
(43) Veröffentlichungstag der Anmeldung: **29.11.2017**
(21) Anmeldenummer: 16170762.5
(22) Anmeldetag: 23.05.2016
(51) Int. Cl.: H01B 3/00, H01B 3/04, H01B 3/08, H01B 3/30, H01B 7/02, H01B 7/42, H02K 3/32, B32B 5/28

(54) **ISOLATIONSBAND, ELEKTRISCHE MASCHINE UND VERFAHREN ZUM HERSTELLEN DES ISOLATIONSBANDS UND DER ELEKTRISCHEN MASCHINE**

(71) Anmelder: Siemens Aktiengesellschaft, 80333 München (DE)
(72) Erfinder: Mashkin, Andrey, 50672 Köln (DE); Brockschmidt, Mario, 45131 Essen (DE); Pohlmann, Friedhelm, 45355 Essen (DE)

(57) **Zusammenfassung**

Die Erfindung betrifft insbesondere ein Isolationsband für eine elektrische Maschine, mit einem Trägergewebe (2), das in der Längsrichtung (4) des Isolationsbands (1) verlaufende Kettfäden (6), die Glasfasern aufweisen, und in der Querrichtung (5) des Isolationsbands (1) verlaufende Schussfäden (7) aufweist, und einem Glimmer aufweisenden Papier (3), das mit dem Trägergewebe (2) flächig verklebt ist, wobei die Schussfäden (7) mäanderförmig angeordnet sind, so dass das Isolationsband (1) in einen in der Querrichtung (5) gestreckten Zustand überführbar ist.

## Beschreibung

Eine elektrische Maschine, wie z.B. ein Motor oder ein Generator, weist einen Ständer mit Nuten auf, in die eine Wicklung elektrische Leiter eingelegt ist. Die elektrische Maschine weist zudem ein elektrisches Isolationssystem auf, das den Zweck hat, die Leiter gegeneinander, gegen den Ständer und gegen die Umgebung elektrisch zu isolieren. Herkömmlich weist das Isolationssystem ein um die Leiter gewickeltes Isolationsband auf. Im Betrieb der elektrischen Maschine erwärmen sich die elektrischen Leiter. Durch Wärmeleitung wird dabei Wärme von den elektrischen Leitern auf das Isolationssystem übertragen. Weil das Isolationssystem und die elektrischen Leiter einen unterschiedlichen Ausdehnungskoeffizienten haben, werden sowohl das Isolationssystem als auch die elektrischen Leiter beim Erwärmen mechanisch beansprucht. Diese Beanspruchung hängt insbesondere von den im Betrieb der elektrischen Maschine auftretenden Temperaturen und der Länge der elektrischen Leiter ab. Bei der Auslegung der elektrischen Maschine wird eine maximal zulässige Relativbewegung zwischen den elektrischen Leitern und dem Isolationssystem berücksichtigt. Dadurch begrenzt die maximal zulässige Relativbewegung die Länge der elektrischen Leiter sowie die im Betrieb auftretende Temperatur und damit die elektrische Leistung der elektrischen Maschine. Aufgabe der Erfindung ist es daher, ein Isolationsband für eine elektrische Maschine, die elektrische Maschine, ein Verfahren zum Herstellen des Isolationsbands und ein Verfahren zum Herstellen der elektrischen Maschine zu schaffen, wobei mit dem Isolationsband die mechanische Beanspruchung der elektrischen Maschine und insbesondere deren Isolationssystem verringerbar ist.

Das erfindungsgemäße Isolationsband für eine elektrische Maschine weist ein Trägergewebe, das in der Längsrichtung des Isolationsbands verlaufende Kettfäden, die Glasfasern aufweisen, und in der Querrichtung des Isolationsbands verlaufende Schussfäden aufweist, und ein ein teilentladungsresistentes Material, insbesondere Glimmer und/oder Aluminiumoxid, aufweisendes Papier auf, das mit dem Trägergewebe flächig verklebt ist, wobei die Schussfäden mäanderförmig angeordnet sind, so dass das Isolationsband in einen in der Querrichtung gestreckten Zustand überführbar ist. Durch die mäanderförmig angeordneten Schussfäden kann ein das Isolationsband aufweisendes Isolationssystem sich im Betrieb einer das Isolationssystem aufweisenden elektrischen Maschine zusammen mit einem elektrischen Leiter der elektrischen Maschine ausdehnen, ohne dass übermäßige mechanische Spannungen und damit eine übermäßige mechanische Beanspruchung in dem Isolationssystem und in dem elektrischen Leiter auftreten. Dadurch ist es möglich, die elektrische Maschine bei einer höheren Temperatur als bei einer herkömmlichen elektrischen Maschine zu betreiben. Zudem ist es möglich die elektrischen Leiter länger auszuführen als es bei der herkömmlichen elektrischen Maschine der Fall ist.

Bevorzugt ist, dass in dem Trägergewebe zwei benachbarte Schussfäden immer gespiegelt in einer in der Querrichtung orientierten Achse zueinander angeordnet sind. Dadurch wird vorteilhaft erreicht, dass sich das Trägergewebe insgesamt nicht verzieht.

Es ist bevorzugt, dass die mäanderförmig angeordneten Schussfäden die Glasfasern aufweisen. Die Glasfasern sind elektrisch nicht leitend und eignen sich daher um in dem Isolationsband verwendet zu werden. Zudem werden die Glasfasern bei einem Auftreten von Teilentladungen in der elektrischen Maschine weniger stark angegriffen als es beispielsweise bei Polymerfasern der Fall ist, so dass das Isolationsband eine lange Lebensdauer hat.

Das alternative erfindungsgemäße Isolationsband für eine elektrische Maschine weist ein Trägergewebe, das in der Längsrichtung des Isolationsbands verlaufende Kettfäden, die Glasfasern aufweisen, und in der Querrichtung des Isolationsbands verlaufende Schussfäden aufweist, und ein ein teilentladungsresistentes Material, insbesondere Glimmer und/oder Aluminiumoxid, aufweisenden Papier auf, das mit dem Trägergewebe flächig verklebt ist, wobei die Schussfäden ein elastisches Material aufweisen, so dass das Isolationsband in einen in der Querrichtung gestreckten Zustand überführbar ist. Durch die elastischen Schussfäden kann ein das Isolationsband aufweisendes Isolationssystem sich im Betrieb einer das Isolationssystem aufweisenden elektrischen Maschine zusammen mit einem elektrischen Leiter der elektrischen Maschine ausdehnen, ohne dass übermäßige mechanische Spannungen und damit eine übermäßige mechanische Beanspruchung in dem Isolationssystem und in dem elektrischen Leiter auftreten. Auch ist es mit dem alternativen erfindungsgemäßen Isolationsband möglich, die elektrische Maschine bei einer höheren Temperatur zu betreiben und längere elektrische Leiter vorzusehen, als es bei einer herkömmlichen elektrischen Maschine der Fall ist.

Es ist bevorzugt, dass das elastische Material Polymerfasern, insbesondere Elastanfasern und/oder Polyesterfasern, aufweist. Die Schussfäden sind bevorzugt mäanderförmig angeordnet. Durch das Vorsehen der mäanderförmig angeordneten und der das elastische Material aufweisenden Schussfäden kann das Isolationsband besonders weit gestreckt werden, wodurch die mechanischen Spannungen besonders gut vermindert werden können. Dabei ist bevorzugt, dass in dem Trägergewebe zwei benachbarte Schussfäden immer gespiegelt in einer in der Querrichtung orientierten Achse zueinander angeordnet sind. Dadurch wird vorteilhaft erreicht, dass sich das Trägergewebe insgesamt nicht verzieht.

Die erfindungsgemäße elektrische Maschine weist einen elektrischen Leiter und das Isolationsband mit den mäanderförmig angeordneten Schussfäden auf, wobei das Isolationsband derart um den elektrischen Leiter gewickelt ist, dass die Querrichtung des Isolationsbands im Wesentlichen parallel zu der Axialrichtung des elektrischen Leiters und die Längsrichtung des Isolationsbands im Wesentlichen parallel zu der Umfangsrichtung des elektrischen Leiters orientiert sind, wobei das Isolationsband derart angeordnet ist, dass es in dem in der Querrichtung gestreckten Zustand überführbar ist oder wobei das Isolationsband zumindest teilweise in dem in der Querrichtung gestreckten Zustand vorliegt und das Trägergewebe von zwei benachbarten Windungen des um den elektrischen Leiter gewickelten Isolationsbands in einem Berührkontakt steht. Die größte Wärmeausdehnung des elektrischen Leiters ist in der Axialrichtung des elektrischen Leiters zu erwarten. Daher ist es besonders vorteilhaft, die mäanderförmig angeordneten Schussfäden parallel zu der Axialrichtung vorzusehen, um die mechanischen Spannungen aufgrund der unterschiedlichen Wärmeausdehnungen des elektrischen Leiters und des Isolationssystems zu verringern. Durch den Berührkontakt kann das Trägergewebe mit sich selbst verklebt werden, und zwar mittels des zum Verkleben des Trägergewebes mit dem das teilentladungsresistente Material, insbesondere Glimmer und/oder Aluminiumoxid, aufweisenden Papier verwendeten Klebers und/oder mittels eines das Isolationsband durchtränkenden Tränkharzes. Durch das mit sich selbst verklebte Trägergewebe kann die Festigkeit des Isolationssystems in radialer Richtung erhöht werden.

Die alternative erfindungsgemäße elektrische Maschine weist einen elektrischen Leiter und ein Isolationsband auf, dessen Schussfäden das elastische Material aufweisen, wobei das Isolationsband derart um den elektrischen Leiter gewickelt ist, dass die Querrichtung des Isolationsbands im Wesentlichen parallel zu der Axialrichtung des elektrischen Leiters und die Längsrichtung des Isolationsbands im Wesentlichen parallel zu der Umfangsrichtung des elektrischen Leiters orientiert sind. Auch hier ist es besonders vorteilhaft, die elastischen Schussfäden parallel zu der Axialrichtung vorzusehen, um die mechanischen Spannungen aufgrund der unterschiedlichen Wärmeausdehnungen des elektrischen Leiters und des Isolationssystems zu verringern.

Es ist bevorzugt, dass das Isolationsband von einem Tränkharz durchtränkt ist, wobei das Tränkharz ausgehärtet ist. Dadurch kann die Festigkeit des Isolationssystems erhöht werden und zudem ist es möglich, für den Fall, dass das Trägergewebe von zwei benachbarten Windungen in Berührkontakt steht, das Trägergewebe an den Stellen des Berührkontaktes mit sich selbst zu verkleben.

Das erfindungsgemäße Verfahren zum Herstellen eines Isolationsbands weist die Schritte auf: a) Herstellen eines Trägergewebes, das in der Längsrichtung des Isolationsbands verlaufende Kettfäden, die Glasfasern aufweisen, und in der Querrichtung des Isolationsbands verlaufende Schussfäden aufweist, derart, dass die Schussfäden mäanderförmig angeordnet sind; b) Anbringen eines ein teilentladungsresistentes Material, insbesondere Glimmer und/oder Aluminiumoxid, aufweisenden Papier an dem Trägergewebes oder b) Zusetzen eines teilentladungsresistenten Materials, insbesondere Glimmer und/oder Aluminiumoxid, zu dem Trägergewebe oder b) Verbinden des Trägergewebes mit einer Schicht, die ein teilentladungsresistentes Material, insbesondere Glimmer und/oder Aluminiumoxid, aufweist. Das Anbringen des Papiers an dem Trägergewebe kann beispielsweise mittels eines flächigen Verklebens, eines Sprühens und/oder eines Filtrierens erfolgen.

Es bevorzugt, dass in Schritt a) beim Weben des Trägergewebes die Schussfäden oszillierend in einer Richtung senkrecht zu der Querrichtung des Isolationsbands bewegt werden. Dabei ist es bevorzugt, dass nach dem Weben eine Schlichte auf das Trägergewebe aufgebracht wird, wodurch die mäanderförmig angeordneten Schussfäden fixiert werden.

Alternativ ist bevorzugt, dass Schritt a) folgende Schritte aufweist: a1) Spannen des Trägergewebes lediglich in der Längsrichtung des Isolationsbands; a2) Aufbringen eines heißen Bindemittels inhomogen auf das in der Längsrichtung gespannte Trägergewebe; a3) Abkühlen des Bindemittels, so dass sich das Bindemittel mit dem Trägergewebe zusammenzieht, wodurch sich die Schussfäden mäanderförmig anordnen. Dabei ist es bevorzugt, dass in Schritt a2) das Bindemittel mittels einer Walze aufgebracht wird. Das Bindemittel kann beispielsweise BADGE, insbesondere mit einer Molekülmasse größer als 700 g/mol, Novolak und/oder Polyvinylacetat aufweisen.

Es ist alternativ bevorzugt, dass in Schritt a) die Schussfäden in dem Trägergewebe mittels mindestens eines Kammes mäanderförmig angeordnet werden und anschließend die mäanderförmige Anordnung der Schussfäden durch Auftragen einer Schlichte und/oder eines Bindemittels auf das Trägergewebe fixiert wird. Das Bindemittel kann beispielsweise BADGE, insbesondere mit einer Molekülmasse größer als 700 g/mol, Novolak, Polyvinylacetat und/oder eine Silanschlichte, insbesondere Glymo, aufweisen.

Schließlich ist es alternativ bevorzugt, dass in Schritt a) eine erste Schlichte auf die Kettfäden und eine zweite Schlichte auf die Schussfäden aufgetragen werden, wobei die Schlichten derart gewählt werden, dass nach dem Auftragen die zweite Schlichte stärker als die erste Schlichte schrumpft, wodurch sich die Schussfäden mäanderförmig anordnen. Dabei ist bevorzugt, dass die zweite Schlichte derart gewählt ist, dass sie bei einem nachfolgenden Durchtränken von einem Tränkharz schmilzt. Dadurch kann das Isolationsband sich verbreitern und den Berührkontakt von zwei benachbarten Windungen der Wicklung ausbilden.

Das erfindungsgemäße Verfahren zum Herstellen einer elektrischen Maschine weist die Schritte auf: c) Bereitstellen des Isolationsbands mit den mäanderförmig angeordneten Schussfäden; d) Fixieren der mäanderförmigen Anordnung der Schussfäden in dem Isolationsband durch Aufbringen einer Schlichte und/oder eines Bindemittels; e) Umwickeln eines elektrischen Leiters mit dem Isolationsband; f) Durchtränken des Isolationsbands mit einem Tränkharz, so dass die Schlichte und/oder das Bindemittel schmelzen.

Ein alternatives erfindungsgemäßes Verfahren zum Herstellen einer elektrischen Maschine weist die Schritte auf: c) Bereitstellen des Isolationsbands mit den mäanderförmig angeordneten Schussfäden; e) Umwickeln eines elektrischen Leiters mit dem Isolationsband; e1) Teilrelaxieren des Trägergewebes, so dass das Trägergewebe von zwei benachbarten Windungen an Verbindungsstellen einen Berührkontakt ausbildet; f) Durchtränken des Isolationsbands mit einem Tränkharz, so dass das Trägergewebe an den Verbindungsstellen verklebt. Durch die verklebten Verbindungsstellen hat das Isolationssystem eine hohe Festigkeit in radialer Richtung. Durch das Teilrelaxieren wird vorteilhaft erreicht, dass das Isolationssystem sich in axialer Richtung strecken kann.

Im Folgenden wird anhand der beigefügten schematischen Zeichnungen die Erfindung näher erläutert. Es zeigen:
- Figur 1: ein Verfahren zum Herstellen eines Isolationsbands,
- Figur 2: einen elektrischen Leiter mit dem Isolationsband, das vor und nach seinem Übergang in den gestreckten Zustand dargestellt ist,
- Figur 3: einen elektrischen Leiter mit dem Isolationsband, das teilweise in seinem nicht gestreckten und teilweise in seinem gestreckten Zustand vorliegt,
- Figur 4: eine Darstellung eines Anpressdrucks und einer Relaxation des Isolationsbands in Abhängigkeit vom Abstand zu einem elektrischen Leiter und
- Figur 5: ein Verfahren zum Herstellen eines Trägergewebes.

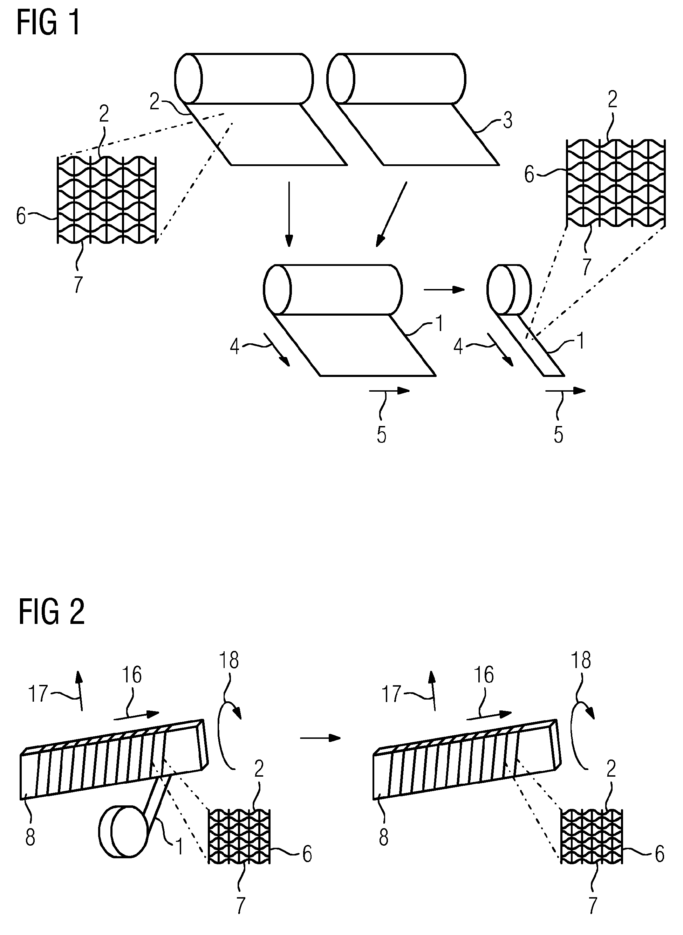

Wie es aus Figuren 1 und 2 ersichtlich ist, weist ein Isolationsband 1 für eine elektrische Maschine ein Trägergewebe 2 und ein teilentladungsresistentes Material, insbesondere Glimmer und/oder Aluminiumoxid, aufweisendes Papier 3 auf. Das Trägergewebe 2 weist in der Längsrichtung 4 des Isolationsbands 1 verlaufende Kettfäden 6, die Glasfasern aufweisen, und in der Querrichtung 5 des Isolationsbands 1 verlaufende Schussfäden 7 auf. Dabei weisen die Kettfäden 6 Glasfasern auf. Figur 1 zeigt ein Verfahren zum Herstellen des Isolationsbands 1, bei dem das Trägergewebe 2 und das das teilentladungsresistente Material aufweisende Papier 3 mittels eines Bindeharzes flächig miteinander verklebt werden. Das Bindeharz kann beispielsweise BADGE sein, insbesondere mit einer Molekülmasse größer als 700 g/mol. Das Trägergewebe 2 und das das teilentladungsresistente Material aufweisende Papier 3 haben in dem Isolationsband 1 die gleiche Länge und die gleiche Breite. Nach dem Verkleben des Trägergewebes 2 und des das teilentladungsresistente Material aufweisenden Papiers 3 kann das Isolationsband 1 in der Längsrichtung 3 durchgeschnitten werden, so dass zwei der Isolationsbänder 1 mit einer kürzeren Breite entstehen.

Figuren 1 und 2 zeigen, dass die Schussfäden 7 mäanderförmig angeordnet sind, so dass das Isolationsband 1 in einen in der Querrichtung 5 gestreckten Zustand überführbar ist. Dabei weisen die Schussfäden 7 die Glasfasern auf oder die Schussfäden 7 weisen ein elastisches Material auf. Wenn die Schussfäden 7 das elastische Material aufweisen, kann das Isolationsband 1 in einen besonders weit gestreckten Zustand überführt werden. Figuren 1, 2 und 5 zeigen, dass in dem Trägergewebe 2 zwei benachbarte Schussfäden 7 immer gespiegelt in einer in der Querrichtung 5 orientierten Achse zueinander angeordnet sind. Dadurch wird erreicht, dass sich das Trägergewebe 2 insgesamt nicht verzieht.

Figur 2 zeigt einen elektrischen Leiter 8 für die elektrische Maschine. Die elektrische Maschine weist das Isolationsband 1 auf, das derart um den elektrischen Leiter 8 gewickelt ist, dass die Längsrichtung 4 des Isolationsbandes 1 mit der Umfangsrichtung 18 des elektrischen Leiters 8 einen Winkel von 3° bis 10° einschließt. Damit sind die Querrichtung 5 des Isolationsbands 1 im Wesentlichen parallel zu der Axialrichtung 16 des elektrischen Leiters 8 und die Längsrichtung 4 des Isolationsbands im Wesentlichen parallel zu der Umfangsrichtung 18 des elektrischen Leiters 8 orientiert. Das Isolationsband 1 ist von einem Tränkharz durchtränkt, wobei das Tränkharz ausgehärtet ist. Dadurch bildet das Isolationsband 1 zusammen mit dem Tränkharz ein Isolationssystem. Das Tränkharz kann beispielsweise ein Epoxidharz aufweisen, insbesondere weist das Epoxidharz ein Epoxid auf, insbesondere ein cycloaliphatisches Epoxid, insbesondere ECC und/oder CY179, Bisphenol-A-diglycidylether und/oder Bisphenol-F-diglycidylether. Das Epoxidharz kann zusätzlich ein Carbonsäureanhydrid aufweisen, insbesondere Phthalsäureanhydrid, Methylhexahydrophthalsäureanhydrid und/oder Hexahydrophthalsäureanhydrid.

Figur 2 zeigt eine erste Alternative für die elektrische Maschine, gemäß der das Isolationsband 1 derart angeordnet ist, dass es in dem in der Querrichtung 5 gestreckten Zustand überführbar ist. Das Überführen in den gestreckten Zustand kann beispielsweise im Betrieb der elektrischen Maschine geschehen, wenn sich der elektrische Leiter 8 erwärmt und somit insbesondere in seine Axialrichtung 16 ausdehnt. Die Schussfäden 7 sind dabei derart mäanderförmig angeordnet, dass beim Ausdehnen kein Schlupf zwischen dem elektrischen Leiter und dem Isolationssystem entsteht. Dadurch ist die mechanische Belastung insbesondere Isolationssystems beim Ausdehnen des elektrischen Leiters 8 gering.

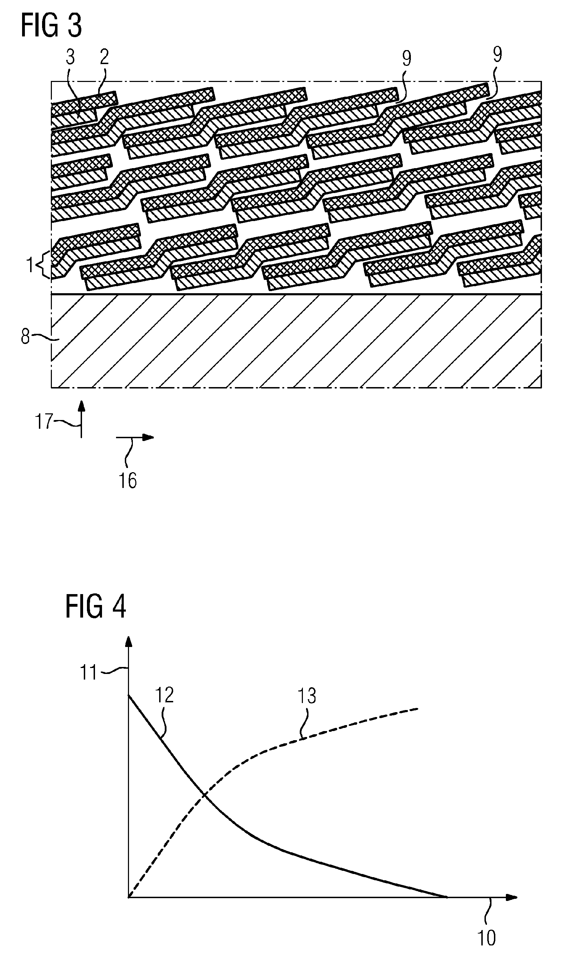

Figur 3 zeigt eine zweite Alternative für die elektrische Maschine, gemäß der das Isolationsband 1 zumindest teilweise in dem in der Querrichtung 5 gestreckten Zustand vorliegt und das Trägergewebe 2 von zwei benachbarten Windungen des um den elektrischen Leiter 8 gewickelten Isolationsbands 1 an mindestens einer Verbindungsstelle 9 in einem Berührkontakt steht. Durch das Bindeharz und/oder das Tränkharz erfolgt an den Verbindungsstellen eine Verklebung des Trägergewebes 2 mit sich selbst. Dadurch ergibt sich eine erhöhte Festigkeit des Isolationssystems in der Radialrichtung 17 des elektrischen Leiters. Besonders vorteilhaft ist es die Verbindungsstellen 9 in Bereichen des elektrischen Leiters 8 vorzusehen, in denen er gekrümmt vorliegt.

In Figur 4 ist ein Diagramm gezeigt, über dessen Ordinate 11 der Abstand in der Radialrichtung 17 von dem elektrischen Leiter 8 und über dessen Abszisse 10 der Anpressdruck 12 und die Relaxation 13 des Isolationsbandes 1 aufgetragen sind. Aus dem Diagramm ist erkenntlich, dass in den äußeren Schichten des Isolationsbands 1, die mit einem großen Radialabstand einhergehen, ein niedriger Anpressdruck 12 und eine starke Relaxation 13 des Isolationsbands 1 vorliegen. Dahingegen liegen in den inneren Schichten des Isolationsbands 1 ein hoher Anpressdruck 12 und eine schwache Relaxation 13 vor. Damit werden die Verbindungsstellen 9, wie es auch in Figur 3 dargestellt ist, vorwiegend in den äußeren Schichten gebildet. In gekrümmten Bereichen der elektrischen Leiter 8 entstehen bei einer Wärmedehnung der elektrischen Leiter 8 besonders starke Kräfte in den äußeren Lagen. Daher ist es besonders vorteilhaft, die Verbindungsstellen 9 in den äußeren Lagen vorzusehen.

Alternativ zu dem Isolationsband 1 mit den mäanderförmig angeordneten Schussfäden 7 kann ein alternatives Isolationsband Schussfäden aufweisen, die ein elastisches Material aufweisen, so dass das Isolationsband in einen in der Querrichtung gestreckten Zustand überführbar ist. Das elastische Material weist Polymerfasern auf, insbesondere Elastanfasern und/oder Polyesterfasern. Das Strecken erfolgt unter einer Dehnung der Schussfäden.

Eine alternative elektrische Maschine weist einen elektrischen Leiter und das alternative Isolationsband auf, das derart um den elektrischen Leiter gewickelt ist, dass die Längsrichtung des Isolationsbandes mit der Umfangsrichtung des elektrischen Leiters einen Winkel von 3° bis 10° einschließt. Damit sind die Querrichtung des Isolationsbands im Wesentlichen parallel zu der Axialrichtung des elektrischen Leiters und die Längsrichtung des Isolationsbands im Wesentlichen parallel zu der Umfangsrichtung des elektrischen Leiters orientiert. Das Überführen des alternativen Isolationsbands in den gestreckten Zustand kann beispielsweise im Betrieb der elektrischen Maschine geschehen, wenn sich der elektrische Leiter erwärmt und somit insbesondere in seine Axialrichtung ausdehnt. Die Schussfäden sind durch das elastische Material dabei derart flexibel, dass beim Ausdehnen kein Schlupf zwischen dem elektrischen Leiter und dem Isolationssystem entsteht.

Das Verfahren zum Herstellen des Isolationsbands 1 mit den mäanderförmig angeordneten Schussfäden 7 weist die Schritte auf: a) Herstellen eines Trägergewebes 2, das in der Längsrichtung 4 des Isolationsbands 1 verlaufende Kettfäden 6, die Glasfasern aufweisen, und in der Querrichtung 5 des Isolationsbands 1 verlaufende Schussfäden 7 aufweist, derart, dass die Schussfäden 7 mäanderförmig angeordnet sind; b) flächiges Verkleben des Trägergewebes 2 mit einem ein teilentladungsresistente Material, insbesondere Glimmer und/oder Aluminiumoxid, aufweisenden Papier 3.

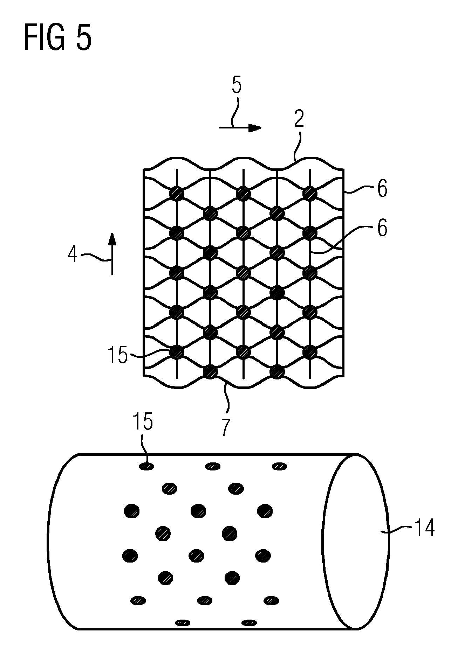

Ein Beispiel für Schritt a) ist in Figur 5 gezeigt. Gemäß diesem Beispiel weist Schritt a) folgende Schritte auf: a1) Spannen des Trägergewebes 2 lediglich in der Längsrichtung 4 des Isolationsbands 1; a2) Aufbringen eines heißen Bindemittels mittels einer Walze 14 inhomogen auf das in der Längsrichtung 4 gespannte Trägergewebe 2; a3) Abkühlen des Bindemittels, so dass sich das Bindemittel mit dem Trägergewebe zusammenzieht, wodurch sich die Schussfäden mäanderförmig anordnen. Dabei werden in Schritt a2) in der Querrichtung 5 angeordnete Reihen von Bindemittelpunkten 15 aufgebracht, wobei benachbarte Reihen immer eine unterschiedliche Anzahl der Bindemittelpunkte 15 aufweisen. Dadurch wird vorteilhaft erreicht, dass die Schussfäden 7 besonders mäanderförmig angeordnet werden.

In einem alternativen Beispiel werden in Schritt a) beim Weben des Trägergewebes 2 die Schussfäden 7 oszillierend in einer Richtung senkrecht zu der Querrichtung 5 des Isolationsbands 1 bewegt. Dabei können zwei benachbarte Schussfäden 7 immer genau gegenphasig bewegt wird. Dadurch wird erreicht, dass in dem Trägergewebe 2 zwei benachbarte Schussfäden 7 immer gespiegelt in einer in der Querrichtung 5 orientierten Achse zueinander angeordnet sind.

In einem weiteren Beispiel werden in Schritt a) die Schussfäden 7 in dem Trägergewebe 2 mittels mindestens eines Kammes mäanderförmig angeordnet und anschließend wird die mäanderförmige Anordnung der Schussfäden 7 durch Auftragen einer Schlichte und/oder eines Bindemittels auf das Trägergewebe 2 fixiert. Beispielsweise können in Schritt a) zwei der Kämme an einen der Schussfäden 7 angreifen, wobei die Kämme versetzt zueinander und in entgegen gesetzte Richtungen den einen Schussfaden 7 verformen.

In einem vorletzten Beispiel werden in Schritt a) eine erste Schlichte auf die Kettfäden 6 und eine zweite Schlichte auf die Schussfäden 7 aufgetragen, wobei die Schlichten derart gewählt werden, dass nach dem Auftragen die zweite Schlichte stärker als die erste Schlichte schrumpft, wodurch sich die Schussfäden mäanderförmig anordnen.

In einem letzten Beispiel wird in Schritt a) das Trägergewebe hergestellt, wobei die Kettfäden ein auxetisches Material aufweisen, und anschließend werden die Kettfäden durch Erwärmen mittels elektromagnetischer Bestrahlung gelängt, wodurch die Schussfäden 6 sich mäanderförmig anordnen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Isolationsband für eine elektrische Maschine, mit einem Trägergewebe (2), das in der Längsrichtung (4) des Isolationsbands (1) verlaufende Kettfäden (6), die Glasfasern aufweisen, und in der Querrichtung (5) des Isolationsbands (1) verlaufende Schussfäden (7) aufweist, und einem ein teilentladungsresistentes Material, insbesondere Glimmer und/oder Aluminiumoxid, aufweisenden Papier (3), das mit dem Trägergewebe (2) flächig verklebt ist,
wobei die Schussfäden (7) mäanderförmig angeordnet sind, so dass das Isolationsband (1) in einen in der Querrichtung (5) gestreckten Zustand überführbar ist.

2. Isolationsband gemäß Anspruch 1,
wobei die mäanderförmig angeordneten Schussfäden (7) die Glasfasern aufweisen.

3. Isolationsband für eine elektrische Maschine, mit einem Trägergewebe (2), das in der Längsrichtung (4) des Isolationsbands (1) verlaufende Kettfäden (6), die Glasfasern aufweisen, und in der Querrichtung (5) des Isolationsbands (1) verlaufende Schussfäden (7) aufweist, und einem ein teilentladungsresistentes Material, insbesondere Glimmer und/oder Aluminiumoxid, aufweisenden Papier (3), das mit dem Trägergewebe (2) flächig verklebt ist,
wobei die Schussfäden (7) ein elastisches Material aufweisen, so dass das Isolationsband (1) in einen in der Querrichtung (5) gestreckten Zustand überführbar ist.

4. Isolationsband gemäß Anspruch 3,
wobei das elastische Material Polymerfasern, insbesondere Elastanfasern, PET-Fasern, Polyamidfasern, PTFE-Fasern, Polypropylenfasern und/oder Polyesterfasern, aufweist.

5. Isolationsband gemäß Anspruch 3 oder 4,
wobei die Schussfäden mäanderförmig angeordnet sind.

6. Elektrische Maschine mit einem elektrischen Leiter (8) und einem Isolationsband (1) gemäß einem der Ansprüche 1, 2 oder 5,
das derart um den elektrischen Leiter (8) gewickelt ist, dass die Querrichtung (5) des Isolationsbands (1) im Wesentlichen parallel zu der Axialrichtung (16) des elektrischen Leiters (8) und die Längsrichtung (4) des Isolationsbands im Wesentlichen parallel zu der Umfangsrichtung (18) des elektrischen Leiters (8) orientiert sind, wobei das Isolationsband (1) derart angeordnet ist, dass es in dem in der Querrichtung (5) gestreckten Zustand überführbar ist oder wobei das Isolationsband (1) zumindest teilweise in dem in der Querrichtung (5) gestreckten Zustand vorliegt und das Trägergewebe (2) von zwei benachbarten Windungen des um den elektrischen Leiter (8) gewickelten Isolationsbands (1) in einem Berührkontakt steht.

7. Elektrische Maschine mit einem elektrischen Leiter (8) und einem Isolationsband (1) gemäß Anspruch 3 oder 4,
das derart um den elektrischen Leiter (8) gewickelt ist, dass die Querrichtung (5) des Isolationsbands (1) im Wesentlichen parallel zu der Axialrichtung (16) des elektrischen Leiters (8) und die Längsrichtung (4) des Isolationsbands im Wesentlichen parallel zu der Umfangsrichtung (18) des elektrischen Leiters (8) orientiert sind.

8. Elektrische Maschine gemäß Anspruch 6 oder 7,
wobei das Isolationsband (1) von einem Tränkharz durchtränkt ist, wobei das Tränkharz ausgehärtet ist.

9. Verfahren zum Herstellen eines Isolationsbands (1), mit den Schritten:
a) Herstellen eines Trägergewebes (2), das in der Längsrichtung (4) des Isolationsbands (1) verlaufende Kettfäden (6), die Glasfasern aufweisen, und in der Querrichtung (5) des Isolationsbands (1) verlaufende Schussfäden (7) aufweist, derart, dass die Schussfäden (7) mäanderförmig angeordnet sind;
b) Anbringen eines ein teilentladungsresistentes Material, insbesondere Glimmer und/oder Aluminiumoxid, aufweisenden Papier (3) an dem Trägergewebes (2).

10. Verfahren gemäß Anspruch 9,
wobei in Schritt a) beim Weben des Trägergewebes (2) die Schussfäden (7) oszillierend in einer Richtung senkrecht zu der Querrichtung (5) des Isolationsbands (1) bewegt werden.

11. Verfahren gemäß Anspruch 9, wobei Schritt a) folgende Schritte aufweist:
a1) Spannen des Trägergewebes (2) lediglich in der Längsrichtung (4) des Isolationsbands (1);
a2) Aufbringen eines heißen Bindemittels inhomogen auf das in der Längsrichtung (4) gespannte Trägergewebe (2);
a3) Abkühlen des Bindemittels, so dass sich das Bindemittel mit dem Trägergewebe zusammenzieht, wodurch sich die Schussfäden mäanderförmig anordnen.

12. Verfahren gemäß Anspruch 11,
wobei in Schritt a2) das Bindemittel mittels einer Walze (14) aufgebracht wird.

13. Verfahren gemäß Anspruch 9,
wobei in Schritt a) die Schussfäden (7) in dem Trägergewebe (2) mittels mindestens eines Kammes mäanderförmig angeordnet werden und anschließend die mäanderförmige Anordnung der Schussfäden (7) durch Auftragen einer Schlichte und/oder eines Bindemittels auf das Trägergewebe (2) fixiert wird.

14. Verfahren gemäß Anspruch 9,
wobei in Schritt a) eine erste Schlichte auf die Kettfäden (6) und eine zweite Schlichte auf die Schussfäden (7) aufgetragen werden, wobei die Schlichten derart gewählt werden, dass nach dem Auftragen die zweite Schlichte stärker als die erste Schlichte schrumpft, wodurch sich die Schussfäden mäanderförmig anordnen oder wobei in Schritt a) das Trägergewebe hergestellt wird, wobei die Kettfäden ein auxetisches Material aufweisen, und anschließend die Kettfäden durch Erwärmen mittels elektromagnetischer Bestrahlung gelängt werden, wodurch die Schussfäden 6 sich mäanderförmig anordnen.

15. Verfahren zum Herstellen einer elektrischen Maschine, mit den Schritten:
c) Bereitstellen eines Isolationsbands (1) gemäß einem der Ansprüche 1, 2 oder 5;
d) Fixieren der mäanderförmigen Anordnung der Schussfäden (7) in dem Isolationsband (1) durch Aufbringen einer Schlichte und/oder eines Bindemittels;
e) Umwickeln eines elektrischen Leiters (8) mit dem Isolationsband (1);
f) Durchtränken des Isolationsbands (1) mit einem Tränkharz, so dass die Schlichte und/oder das Bindemittel schmelzen.

16. Verfahren zum Herstellen einer elektrischen Maschine, mit den Schritten:
c) Bereitstellen eines Isolationsbands (1) gemäß einem der Ansprüche 1, 2 oder 5;
e) Umwickeln eines elektrischen Leiters (8) mit dem Isolationsband (1);
e1) Teilrelaxieren des Trägergewebes (2), so dass das Trägergewebe (2) von zwei benachbarten Windungen an Verbindungsstellen (9) einen Berührkontakt ausbildet;
f) Durchtränken des Isolationsbands (1) mit einem Tränkharz, so dass das Trägergewebe (2) an den Verbindungsstellen verklebt.
